# EUROPEAN PATENT APPLICATION

(11) **EP 4 722 870 A1**
(43) Date of publication of application: **08.04.2026**
(21) Application number: 25205328.5
(22) Date of filing: 29.09.2025
(51) Int. Cl.: G06F 3/01, G02B 30/56, G06F 3/04817, G06F 3/0481

(54) **AERIAL INPUT APPARATUS**

(30) Priority: 07.10.2024 JP 2024175599
(71) Applicant: Alps Alpine Co., Ltd., Ota-ku, Tokyo 145-8501 (JP)
(72) Inventor: Ashimine, Katsunari, Iwaki-city Fukushima (JP)
(74) Representative: Schmitt-Nilson Schraud Waibel Wohlfrom Patentanwälte Partnerschaft mbB

(57) **Abstract**

An aerial input apparatus includes a first display configured to display an aerial image relating to an input operation; a second display configured to display an image relating to the aerial image at a position different from a display position of the aerial image; a detector configured to detect a position or a movement of an operation portion of a user; and a display controller configured to control the first display and the second display based on a detection result obtained by the detector. The display controller is configured to switch the first display from a display state to a non-display state and to switch the second display from a non-display state to a display state, in response to determining that the operation portion has approached or touched the aerial image while the first display is displaying the aerial image.

## Description

The present application is based on and claims priority to Japanese Patent Application No. 2024-175599, filed on October 7, 2024, the entire contents of which are incorporated herein by reference.

The present invention relates to an aerial input apparatus for performing input to an aerial image that is displayed by retroreflection.

Aerial imaging by retro-reflection (AIRR) is known. For example, in the aerial imaging apparatus of Patent Document 1, a decorative sheet is arranged between an imaging element 20 and an imaging position P such that the imaging element 20 cannot be observed from the outside.

Patent Document 1: JP 2020-76811A.

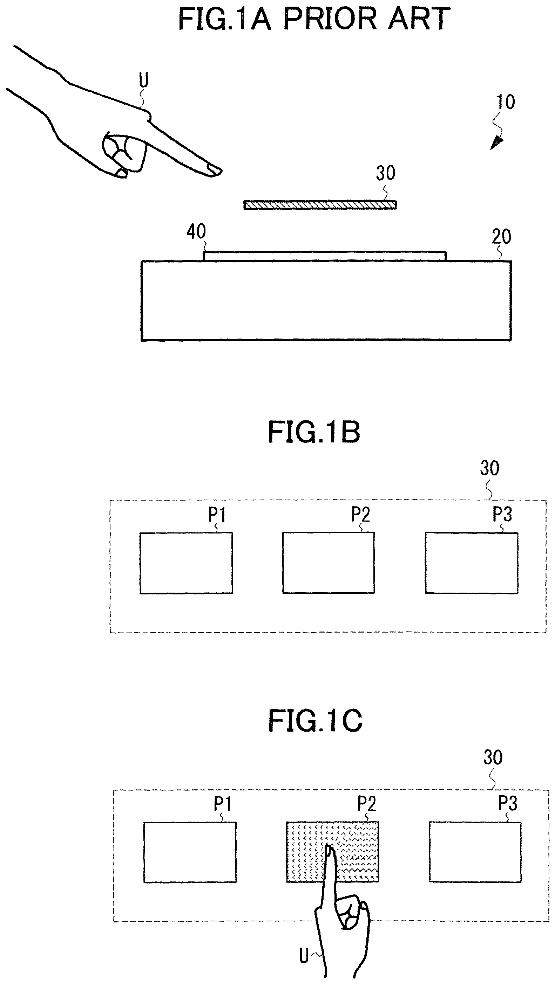

FIG. 1A illustrates an example of an aerial input apparatus using an aerial image formed by retroreflection. An aerial input apparatus 10 includes a casing (housing) 20 housing an optical member or the like for generating an aerial image, and a capacitance-type touch panel 40 for detecting the position and movement of an operation portion U such as a user's finger relative to the aerial image 30 displayed above the casing 20. The aerial image 30 includes, for example, a plurality of icons P1, P2, and P3 for receiving input from a user as illustrated in FIG. 1B. When the approaching or the touching by the operation portion U with respect to the aerial image 30 is detected by the touch panel 40, the aerial input apparatus 10 determines that input to the aerial image 30 has been performed.

Because the conventional aerial input apparatus 10 has a problem that the ON/OFF state of input to the aerial image 30 is not physically known, it has been proposed to provide feedback to the operator whether input has been performed or not by changing the color or luminance of the aerial image 30 or moving the aerial image 30 back and forth when the approaching or touching with respect to the aerial image 30 is detected. For example, as illustrated in FIG. 1C, when the operation portion U touches the icon P2, the color of the icon P2 is changed to provide feedback to the operator that input to the icon P2 has been performed.

However, in the method of changing the color or luminance of the aerial image as described above, there is a problem that the operator cannot recognize whether input has been performed appropriately, without prior information of which color represents input ON and which color represents input OFF. Further, even in a method of moving an aerial image back and forth, if the moving distance of a floating aerial image is small, it is difficult to visually recognize the movement of the aerial image.

An object of the present invention is to provide an aerial input apparatus capable of making it easier to recognize the presence or absence of an operation with respect to an aerial image.

The present disclosure relates to an aerial input apparatus according to the appended claims. Embodiments are disclosed in the dependent claims. According to an embodiment, an aerial input apparatus includes a first display configured to display an aerial image relating to an input operation; a second display configured to display an image relating to the aerial image at a position different from a display position of the aerial image; a detector configured to detect a position or a movement of an operation portion of a user; and a display controller configured to control the first display and the second display based on a detection result obtained by the detector, wherein the display controller is configured to switch the first display from a display state to a non-display state and to switch the second display from a non-display state to a display state, in response to determining that the operation portion has approached or touched the aerial image while the first display is displaying the aerial image.

Other objects and further features of the present invention will be apparent from the following detailed description when read in conjunction with the accompanying drawings, in which:
FIGS. 1A illustrates a schematic configuration of a conventional aerial input apparatus and FIGS. 1B and 1C illustrate a display example of an aerial image;
FIG. 2 is a block diagram illustrating an electrical configuration of an aerial input apparatus according to an embodiment of the present invention;
FIG. 3 is a schematic cross-sectional view illustrating a configuration of an aerial input apparatus according to an embodiment of the present invention;
FIG. 4A is a display example of an aerial image, FIG. 4B is a top view of a casing display, FIG. 4C is a display example of design Q2 in the casing display, and FIG. 4D is a cross-sectional view illustrating another configuration example of the casing display;
FIGS. 5A to 5C are diagrams illustrating a first operation of an aerial input apparatus according to an embodiment of the present invention;
FIG. 6A is a table illustrating the relationship between the movement of the operation portion and the display/non-display of the aerial image/casing display in the first operation, and FIG. 6B is a diagram illustrating a flow of the first operation;
FIGS. 7A to 7D are diagrams illustrating a second operation of an aerial input apparatus according to an embodiment of the present invention;
FIG. 8A is a table illustrating the relationship between the movement of the operation portion and the display/non-display of the aerial image/casing display in the second operation, and FIG. 8B is a diagram illustrating a flow of the second operation; and
FIG. 9A is a table illustrating the relationship between the movement of the operation portion and the display/non-display of the aerial image/casing display in a modified example of the second operation, and FIG. 9B is a diagram illustrating a flow of the modified example of the second operation.

According to aspects of the present invention, when it is determined that the operation portion has approached or touched the aerial image while the first display unit is displaying the aerial image, the first display unit is switched from a display state to a non-display state and the second display unit is switched from a non-display state to a display state, so that the operator can easily recognize the state of the input operation by an image displayed at a position different from the aerial image.

Next, embodiments of the present invention will be described. The present invention relates to an aerial input apparatus for performing input to an aerial image displayed by retroreflection. According to one aspect of the present invention, in an aerial input apparatus integrating an aerial image with a decorative print, when an aerial image representing a key is touched, the input key moves to the surface of the decorative printing, so that even a person viewing the image for the first time can easily determine which key is being input. Note that the drawings referred to in the following description of the embodiments contain exaggerated representations to facilitate understanding of the invention and do not represent the shape or scale of an actual product.

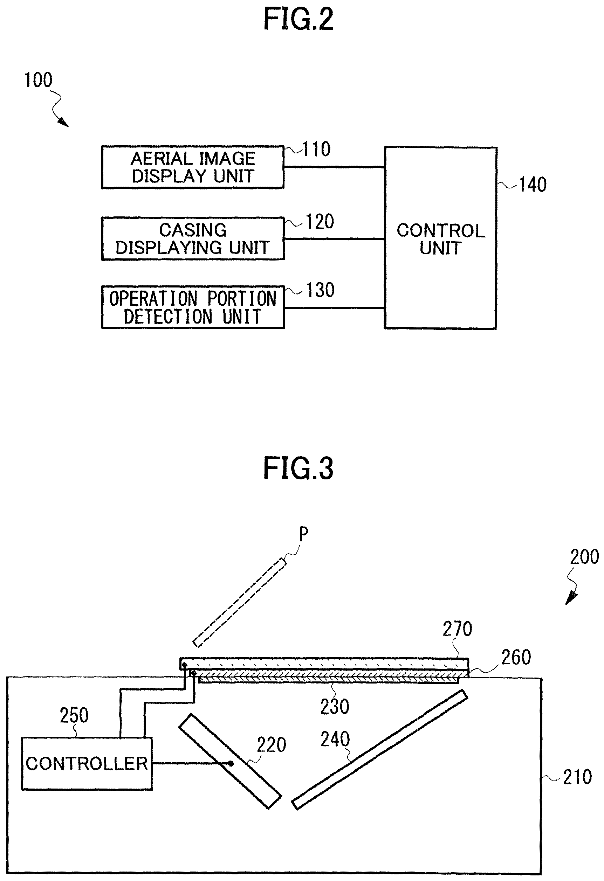

Next, an embodiment of the present invention will be described in detail. FIG. 2 is a block diagram illustrating an electrical configuration of an aerial input apparatus according to an embodiment of the present invention. An aerial input apparatus 100 of the present embodiment includes an aerial image display unit 110 capable of displaying an aerial image using retroreflection, a casing displaying unit 120 capable of displaying an image related to the aerial image, on a casing surface different from the display position of the aerial image, an operation portion detection unit 130 for detecting the position and movement of an operation portion such as a finger or hand of a user, and a control unit 140 for controlling the aerial image display unit 110 and the casing displaying unit 120 based on the detection result obtained by the operation portion detection unit 130.

The aerial image display unit 110 displays an aerial image for receiving input from a user. The number, shape, size, color, and the like of the aerial image are not particularly limited, but the aerial image may be, for example, a key or an icon. The user performs an input operation by approaching or touching an aerial image with an operation portion such as a finger or hand.

The casing displaying unit 120 displays an image related to the aerial image on a casing surface different from a display position of the aerial image. This image may be exactly the same as the aerial image to be displayed, or may be an image, text, or icon whose relationship with the aerial image can be easily recognized.

The operation portion detection unit 130 detects the position or movement of the operation portion of the user. The configuration of the operation portion detection unit 130 is not particularly limited, but the operation portion detection unit 130 is configured by using, for example, a capacitance-type touch panel (hereinafter, an electrostatic sensor) or a three-dimensional distance sensor using radiated light and reflected light thereof.

The control unit 140 receives the detection result obtained by the operation portion detection unit 130, determines whether or not the user's operation portion is operating the aerial image, and controls the display by the aerial image display unit 110 and the casing displaying unit 120 based on the determination result. The control unit 140 is configured by using hardware resources and/or software resources.

In one embodiment, when it is determined that the operation portion has approached or touched the aerial image while the aerial image is being displayed, the control unit 140 switches the aerial image from a display state to a non-display state and switches the casing displaying unit 120 from a non-display state to a display state, thereby notifying the input ON operation state, and when it is determined that the operation portion has moved away from the position of the aerial image, the control unit 140 switches the aerial image from a non-display state to a display state and switches the casing displaying unit 120 from a display state to a non-display state, thereby notifying the input OFF operation state.

Next, a specific configuration of the aerial input apparatus of the present embodiment will be described. FIG. 3 is a schematic sectional view illustrating a configuration of the aerial input apparatus of the present embodiment. An aerial image input apparatus 200 includes a substantially rectangular casing (or housing) 210, a display 220, an optical member 230, a retroreflection member 240, a controller 250, an electrostatic sensor 260, and a casing display 270.

The display 220, the optical member 230, and the retroreflection member 240 housed in the casing 210 constitute the aerial image display unit 110. The display 220 is arranged in an inclined manner inside the casing 210. The display 220 is a light source of the aerial image display unit 110, and outputs an original image of the aerial image P in response to an instruction from the controller 260. The display 220 is not particularly limited, but may be, for example, an LED display, an organic EL display, a projector, or an LED unit in which a plurality of LEDs are 2-dimensionally arranged.

The optical member 230 is composed of a beam splitter or a half mirror, and is attached to the front surface of the casing 210. The beam splitter or the half mirror is composed of, for example, a dielectric multilayer film or an anti-reflection film formed on the front or back surface of a substrate such as a flat plate made of glass or plastic. The optical member 230 reflects part of the light output from the display 220 toward the retroreflection member 240, and transmits the light reflected by the retroreflection member 240 to form an aerial image P.

The retroreflection member 240 is an optical member that reflects light in the same direction as the incident light, and although its configuration is not particularly limited, it may be formed, for example, from a triangular pyramid retroreflection element or a full-cube corner retroreflection element. The retroreflection member 240 may include a phase difference film such as a λ/4 plate on its surface.

The controller 250 constitutes the control unit 140, and controls the display 220 and the casing display 270 based on the detection result obtained by the electrostatic sensor 260. The controller 250 includes, for example, a microcontroller or a microprocessor including a ROM/RAM, and controls the display 220 and the casing display 270 by software stored in the ROM/RAM. The controller 250 stores information necessary for controlling the display 220 and the casing display 270, such as a coordinate position at which the aerial image P is formed, a coordinate position of the casing display 270, and the like, in a memory such as a ROM/RAM.

When the controller 250 drives the display 220, the display 220 outputs an original image of the aerial image P. A part of the light output from the display 220 is reflected by the optical member 230, and the reflected light is incident on the retroreflection member 240, and the retro-reflected light therefrom passes through the optical member 230, the electrostatic sensor 260, and the casing display 270 to form an aerial image P above the casing 210. Because the aerial image P is formed at a position symmetrical to the display 220 with respect to the optical member 230, the aerial image P is displayed at an inclination above the casing 210.

The electrostatic sensor 260 is arranged above the optical member 230. The electrostatic sensor 260 is, for example, a capacitance-type transparent touch panel laminated on the upper surface of the optical member 230. The electrostatic sensor 260 measures the capacitance at fixed time intervals, and detects the position or movement of the operation portion based on the change in the measured capacitance. The detection result is provided to the controller 250.

The casing display 270 is mounted above the electrostatic sensor 260. The casing display 270 constitutes a casing displaying unit 120. The casing display 270 is controlled by the controller 250 to display an image Q associated with the aerial image P, on the surface of the casing 210.

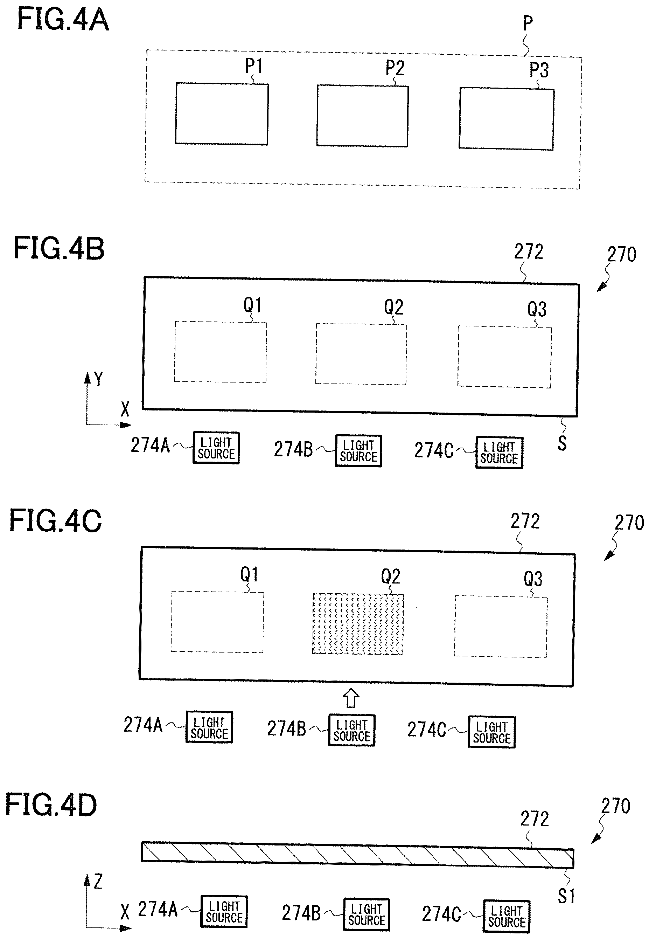

An example of the configuration of the casing display 270 will be described with reference to FIGS. 4A to 4D. FIG. 4A is a display example of an aerial image P, wherein the aerial image P displays 3 icons P1, P2, and P3. FIG. 4B is a top view illustrating a schematic configuration of the casing display 270. The casing display 270 includes a light guide plate 272 and light sources 274A, 274B, and 274C (collectively, light sources 274) for irradiating the light guide plate 272, and designs Q1, Q2, and Q3 associated with the icons P1, P2, and P3 are formed on the light guide plate 272.

The light guide plate 272 is a generally rectangular transparent plate-like or film-shaped optical member, and is made of, for example, glass, acrylic plastic, polycarbonate resin, or cycloolefin resin. The method of forming the designs Q1, Q2, and Q3 is not particularly limited, but for example, the designs are formed by laser processing or printing processing on the bottom or top surface of the light guide plate 272, or by sticking a decorative film on the bottom or top surface of the light guide plate 272.

The designs Q1, Q2, and Q3 are images associated with the icons P1, P2, and P3, and for example, if the icons P1, P2, and P3 are images representing switches or keys, the designs Q1, Q2, and Q3 are also images representing switches or keys. In this case, the designs Q1, Q2, and Q3 may be images different in color from the icons P1, P2, and P3, or images different in luminance from the icons P1, P2, and P3. In another aspect, the designs Q1, Q2, and Q3 may be images different from the icons P1, P2, and P3, or may include text indicating a state related to the input operation.

The light guide plate 272 has a constant thickness, and light sources 274A, 274B, 274C are arranged along one side surface S. The light sources 274A, 274B, and 274C are, for example, light emitting diodes or laser diodes. The light sources 274A, 274B, and 274C correspond to the positions of the designs Q1, Q2, and Q3 in the X direction, respectively, and the light emitted from the light source 274A enters from the side surface S of the light guide plate 272 to irradiate the design Q1, the light emitted from the light source 274B enters from the side surface S of the light guide plate 272 to irradiate the design Q2, and the light emitted from the light source 274C enters from the side surface S of the light guide plate 272 to irradiate the design Q3. The controller 250 selectively turns on/off the light sources 274A, 274B, and 274C in accordance with the icons P1, P2, and P3 to which an input operation is performed.

FIG. 4C illustrates a state when the light sources 274A and 274C are turned off and the light source 274B is turned on. At this time, the design Q2 is irradiated by the light source 274B, and the design Q2 is displayed with a constant luminance on the surface of the casing 210. On the other hand, because the designs Q1 and Q3 are not irradiated, these portions are transparent areas of the light guide plate.

The configuration of the casing display illustrated in FIG. 4B is an example, and other configurations may be used. For example, the designs Q1, Q2, and Q3 may be selectively irradiated with light from one light source by using an optical system. Alternatively, as illustrated in the sectional view of FIG. 4D, the light sources 274A, 274B, and 274C may be arranged along the bottom surface S1 of the light guide plate 272 in the X direction, and the designs Q1, Q2, and Q3 may be selectively irradiated with light from the light sources 274A, 274B, and 274C in the Z direction.

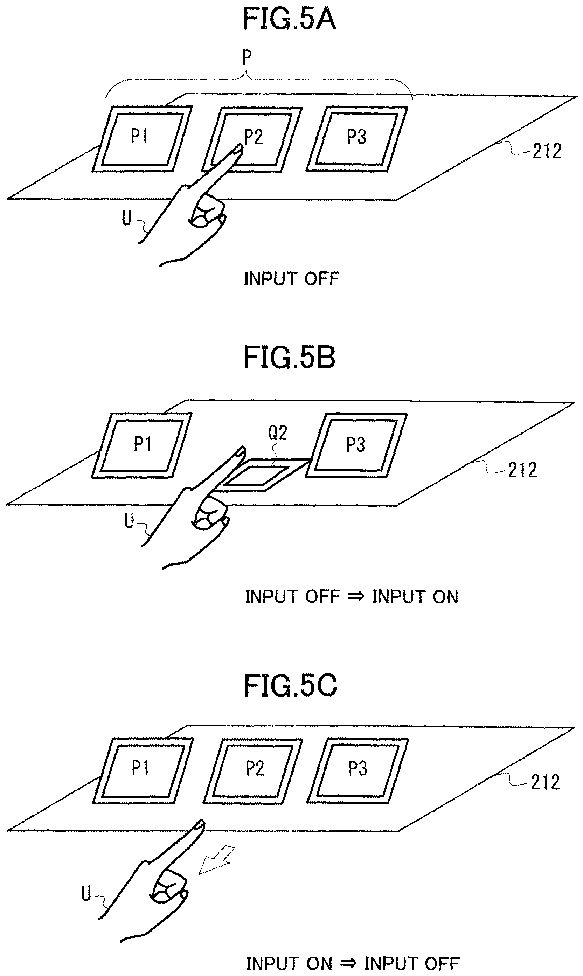

Next, the first operation of the aerial input apparatus of the present embodiment will be described. The first operation corresponds to the momentary operation of a general switch. As illustrated in FIG. 5A, the controller 250 displays the original image of the aerial image P on the display 220, and displays the aerial image P of icons P1, P2, and P3 on a surface 212 of the casing 210. The icons P1, P2, and P3 represent icons (e.g., keys and switches such as play, fast-forward, and stop buttons) for a user to perform an input operation. This state is an input OFF state.

When the user brings the finger U close to the icon P2 to perform input with respect to the icon P2, the controller 250 determines that the finger U has approached or touched the icon P2 based on the detection result obtained by the electrostatic sensor 260. Based on the determination result, the controller 250 controls the display 220 such that the icon P2 is not displayed, and simultaneously controls the casing display 270 such that the design Q2 corresponding to the icon P2 is displayed. This display switching indicates switching from input OFF to input ON, which is illustrated in FIG. 5B.

Next, when the user moves the finger U away, the controller 250 determines that the finger U is away from the position of the icon P2 based on the detection result obtained by the electrostatic sensor 260, and controls the display 220 such that the icon P2 is displayed, and simultaneously controls the casing display 270 such that the design Q2 corresponding to the icon P2 is not displayed. This display switching indicates switching from input ON to input OFF, which is illustrated in FIG. 5C.

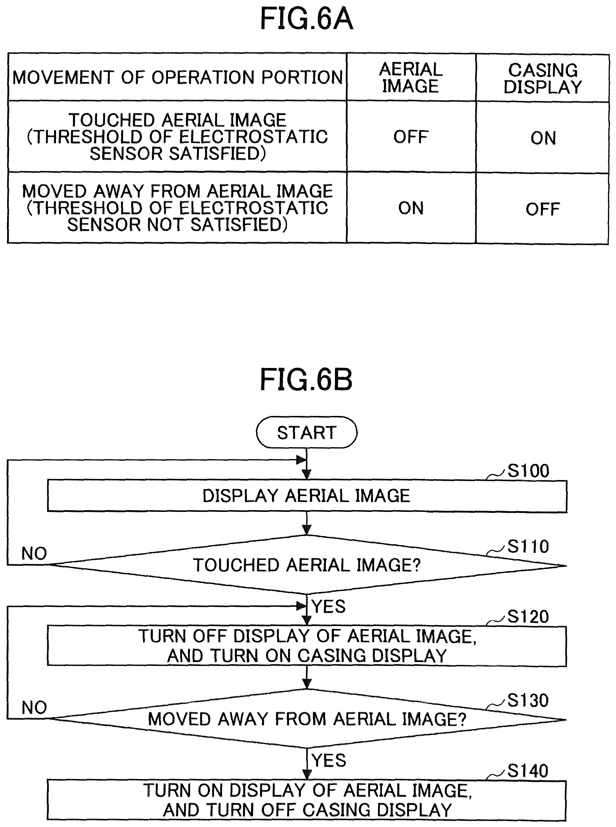

FIG. 6A is a table illustrating the relationship between the movement of the operation portion and the ON/OFF status of the aerial image/casing display in the first operation of the present embodiment. The controller 250 turns OFF the display of the aerial image and turns ON the display of the casing when it is determined that the finger U has approached or touched the aerial image based on the detection result obtained by the electrostatic sensor 260, and turns ON the display of the aerial image and turns OFF the display of the casing when it is determined that the finger U has moved away from the position of the aerial image.

FIG. 6B is an operation flowchart when the controller 250 executes the first operation (momentary operation). The controller 250 drives the display 220 to display an aerial image (S100). At this time, the casing display 270 is not displayed. The controller 250 monitors the detection result obtained by the electrostatic sensor 260, determines whether the finger U has touched the aerial image P (S110), and when it is determined that the finger U has touched the aerial image P, the controller 250 hides the aerial image P and turns on the casing display (S120). Next, the controller 250 determines whether the finger U has moved away from the imaging position of the aerial image P (S130), and when it is determined that the finger U has moved away, the controller 250 hides the casing display and displays the aerial image (S140).

As described above, according to the present embodiment, the user can visually and physically determine the input state by displaying the input state (ON/OFF) to the aerial image not only in color but also at a position clearly different from the aerial image. That is, by displaying ON for the casing side, the state of the device can be determined just by looking at it.

Further, the input state to the aerial image can be easily identified from the viewpoint of universal design by changing the display position and angle, in addition to changing the color of the aerial image and moving back and forth the aerial image.

Further, by arranging objects having different heights, the floating feeling of the aerial image becomes easy to perceive, and the visibility of the aerial image can be further improved.

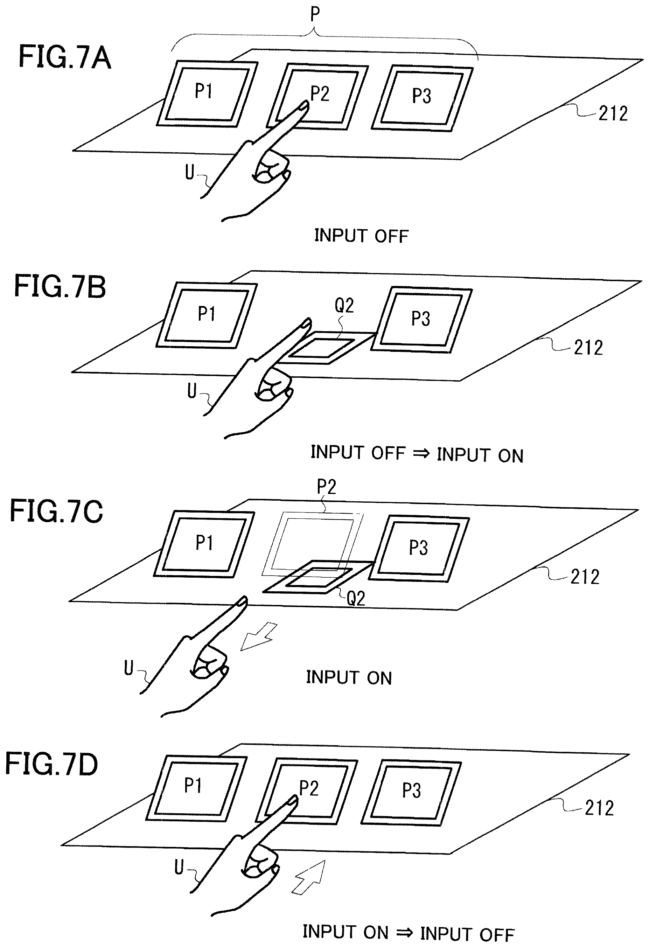

Next, the second operation of the aerial input apparatus 100 of the present embodiment will be described. The second operation corresponds to an alternate operation of the switch. The input OFF illustrated in FIG. 7A and the switching from the input OFF to the input ON illustrated in FIG. 7B are the same as those in FIGS. 5A and 5B described in the first operation. In the second operation, as illustrated in FIG. 7C, even if the finger U is moved away from the imaging position of the aerial image, the display of the design Q2 on the casing display 270 is maintained as it is, that is, the input ON state is continued.

Then, when the finger U approaches the imaging position of the aerial image again, the controller 250 controls the display 220 such that the aerial image of the icon P2 is displayed, and simultaneously controls the casing display 270 such that the design Q2 corresponding to the icon P2 is not displayed. This switching of the display indicates the switching from the input ON to the input OFF, and this state is illustrated in FIG. 7D.

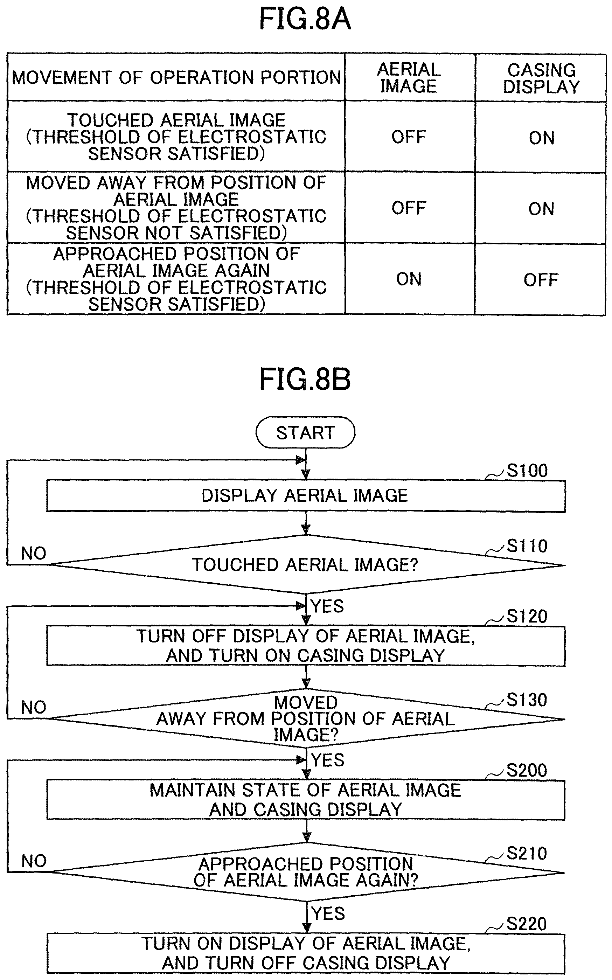

FIG. 8A is a table illustrating the relationship between the movement of the operation portion and the on/off status of the aerial image/casing display in the second operation of the present embodiment. When the controller 250 determines that the finger U has approached or touched the aerial image based on the detection result obtained by the electrostatic sensor 260, the display of the aerial image is turned OFF and the casing display is turned ON. When the finger U has moved away from the imaging position of the aerial image, the display of the aerial image remains OFF and the casing display remains ON. When the finger approaches again the imaging position of the aerial image, the display of the aerial image is turned ON and the casing display is turned OFF.

FIG. 8B is a flowchart illustrating the operation when the controller 250 executes the second operation (alternate operation). The processing from steps S100 to S130 is the same as that of the first operation illustrated in FIG. 6B. The controller 250 determines whether the finger U has moved away from the imaging position of the aerial image P (S130), and when it is determined that the finger U has moved away, the state of the aerial image and the casing display is maintained as it is (S200). Then, the controller 250 determines again whether the finger U has approached the imaging position of the aerial image P (S210), and when it is determined that the finger U has approached the imaging position of the aerial image P, the aerial image P is displayed and the casing display is not displayed (S220).

As described above, according to the present embodiment, even when the finger moves away from the casing, the aerial image is not displayed and the casing display is maintained to be displayed, such that the input state of the aerial image can be more easily identified.

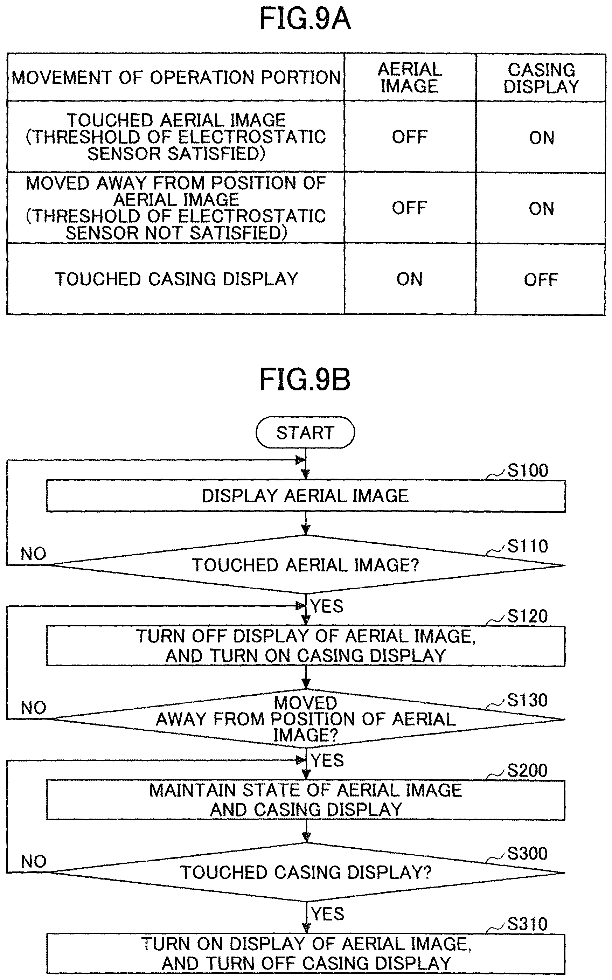

Next, a modified example of the second operation will be described. FIG. 9A is a table illustrating the relationship between the movement of the operation portion and the on/off status of the aerial image/casing display in the modified example. When the finger U has approached or touched the aerial image P, the controller 250 turns OFF the display of the aerial image P and turns ON the casing display, and when the finger U has moved away from the imaging position of the aerial image P, the display of the aerial image P remains OFF and the casing display remains ON. So far, the operation is the same as the second operation described above, but in the modified example, when the finger U has approached or touched the casing display Q, the display of the aerial image P is switched ON and the casing display is switched OFF.

FIG. 9B is an operation flowchart when the controller 250 executes the modified example of the second operation. The processing from steps S100 to S200 is the same as the second operation illustrated in FIG. 8B. While the aerial image P is not displayed and the casing display is continued, the controller 250 determines whether or not the finger U has touched the casing display 270 (S300). When input is performed with respect to the icon P2, the casing display 270 displays the design Q2, and in this case, the controller 250 determines whether or not the finger U has touched or approached the design Q. When it is determined that the finger U has touched the design Q, the controller 250 displays the aerial image P and hides the casing display (step S310).

Although preferred embodiments of the present invention have been described in detail above, the present invention is not limited to any particular embodiment, and various modifications and changes are possible within the scope of the invention described in the appended claims.

For example, in the above embodiments, the aerial image P includes three icons P1, P2, and P3, and the casing display 270 has three designs, but this is only an example, and there may be any number of icons and designs. Further, the number of icons illustrated in the aerial image and the number of designs formed on the casing display 270 need not necessarily match. For example, the input states of the icons P1, P2, and P3 may be shared by one design. Further, in the above embodiment, the designs are displayed by using a light guide plate, but the embodiment is not limited thereto, and a transparent display may be arranged on the surface of the casing, and the transparent display may be driven to display the input state.

The aerial input apparatus of the present embodiments can be applied to a user input interface, for example, a computer device, a vehicle-mounted electronic device, an ATM of a bank or the like, a ticket purchasing machine of a station or the like, an input button of an elevator, or the like.

## Claims

1. An aerial input apparatus comprising:
a first display configured to display an aerial image relating to an input operation;
a second display configured to display an image relating to the aerial image at a position different from a display position of the aerial image;
a detector configured to detect a position or a movement of an operation portion of a user; and
a display controller configured to control the first display and the second display based on a detection result obtained by the detector,
wherein the display controller is configured to switch the first display from a display state to a non-display state and to switch the second display from a non-display state to a display state, in response to determining that the operation portion has approached or touched the aerial image while the first display is displaying the aerial image.

2. The aerial input apparatus according to claim 1, wherein the display controller is configured to switch the second display from a display state to a non-display state and switch the first display from a non-display state to a display state, in response to determining that the operation portion has moved away from an imaging position of the aerial image.

3. The aerial input apparatus according to claim 1 or 2, wherein the display controller is configured to maintain the first display in a non-display state and maintain the second display in a display state, in response to determining that the operation portion has moved away from an imaging position of the aerial image.

4. The aerial input apparatus according to one of claims 1 to 3, wherein the display controller is configured to switch the second display from a display state to a non-display state and switch the first display from a non-display state to a display state, in response to determining that the operation portion has approached or touched the imaging position of the aerial image.

5. The aerial input apparatus according to one of claims 1 to 4, wherein the display controller is configured to switch the second display from a display state to a non-display state and switch the first display from a non-display state to a display state, in response to determining that the operation portion has approached or touched the image.

6. The aerial input apparatus according to one of claims 1 to 5, further comprising:
a casing configured to house the first display, wherein
the first display is configured to display the aerial image above the casing, and
the second display is configured to display the image on a surface of the casing.

7. The aerial input apparatus according to one of claims 1 to 6, wherein
the second display includes:
a light guide plate on which a design for the image is formed, and
a light source configured to irradiate the light guide plate, wherein
the light guide plate is mounted on the surface of the casing.

8. The aerial input apparatus according to one of claims 1 to 7, wherein the second display includes a transparent display arranged on the surface of the casing, the transparent display being configured to display the image.

9. The aerial input apparatus according to one of claims 1 to 8, wherein the detector includes an electrostatic sensor configured to detect the position or the movement of the operation portion from a change in a capacitance, the electrostatic sensor being mounted on the surface of the casing.
